# EUROPÄISCHE PATENTSCHRIFT

(11) **EP 4 237 196 B1**
(45) Veröffentlichungstag und Bekanntmachung des Hinweises auf die Patenterteilung: **18.12.2024**
(21) Anmeldenummer: 22723091.9
(22) Anmeldetag: 14.04.2022
(51) Int. Cl.: B26D 7/06, B25B 11/00, B26D 7/01, B23Q 3/08

(54) **VORRICHTUNG ZUM MESSERSCHNEIDEN ODER SÄGEN VON WERKSTÜCKEN**
DEVICE FOR THE KNIFE CUTTING OR SAWING OF WORKPIECES
DISPOSITIF POUR COUPER OU SCIER AU COUTEAU DES PIÈCES À USINER

(30) Priorität: 19.04.2021 DE 102021109780
(43) Veröffentlichungstag der Anmeldung: 06.09.2023
(73) Patentinhaber: ALBRECHT BÄUMER GmbH & Co. KG, 57258 Freudenberg (DE)
(72) Erfinder: MOISEL, Christoph, 51069 KÖLN (DE); HORSTHEMKE, Jan, 57072 SIEGEN (DE)
(74) Vertreter: Patentanwälte Bauer Vorberg Kayser
(86) Internationale Anmeldenummer: PCT/EP2022/060079
(87) Internationale Veröffentlichungsnummer: WO 2022/223453

(56) Entgegenhaltungen:
- DE-A1- 102004 006 854
- DE-A1- 102009 025 817
- DE-A1- 3 234 969
- DE-A1- 4 030 113
- GB-A- 2 168 915
- US-A- 5 141 212

## Beschreibung

Die Erfindung betrifft eine Vorrichtung zum Messerschneiden oder Sägen von Werkstücken gemäß dem Oberbegriff des Patentanspruchs 1.

Messerschneiden und Sägen sind dabei gemäß DIN-Normen (z.B. DIN 8588 und DIN 8589-6) definierte Bearbeitungsmethoden von Werkstücken. Messerschneiden bezeichnet dabei das Zerteilen eines Werkstückes mittels mindestens eines Messers und Sägen die spanende Bearbeitung eines Werkstückes. Zum Messerschneiden werden insbesondere glatte und gezahnte Messer verwendet und zum Sägen Sägeblätter mit Zahnverschränkung. Im Gegensatz zum Zerspanen werden hier aus einem Halbzeug Zwischenprodukte oder Endprodukte herausgetrennt, welche das Gutteil bilden. Beim Zerspanen ist der Abtrag niemals das Gutteil. Hier soll das Werkstück sukzessive abgetragen werden, um eine Mehrzahl von Gutteilen herzustellen.

Aus der US 5,151,212 A ist eine Vorrichtung nach dem Oberbegriff von Anspruch 1 bekannt, welche zum Halten eines Werkstückes aus Blech dient. Aus GB 2 168 915 A ist eine Vorrichtung bekannt, die dazu dient, ein Werkstück in Form einer harten Platte anzusaugen. Aus DE 32 34 969 A1 ist eine Vakuum-Aufspannvorrichtung zum Halten von Werkstücken bekannt, wobei die Werkstücke verhältnismäßig undurchlässig für Luft sein sollen. Unter diese Erfindung sollen vor allem Vorrichtungen fallen, welche zum Verarbeiten von Werkstücken aus folgenden Materialien dienen:
- Polymer-Schaumstoffen (wie PU, PE, EVA, PVC, PS, PP, PE),
- aufgeschäumten und/oder porigen Materialien wie Schaumglas oder Strukturwerkstoffen (Wabengitter),
- Gummi oder Gummiverbund,
- Faser- und weiteren Verbundmaterialien (z.B. Kork),
- Verbundschaum oder recyceltem, geschreddertem und dann neu verklebtem Schaum,
- elastischen, weichen Vollmaterialien aus PU.
- spröd-harten Materialien, wie z.B. Dämmmaterialien aus Schaumstoff, Gummi oder Kunststoff.

Bei den Werkstücken handelt es sich insbesondere auch um Rohmaterialien oder um Halbzeuge.

Um die zu schneidenden oder zu sägenden Werkstücke zu transportieren und zu bearbeiten, ist es erforderlich, die Werkstücke auf einer Unterlage zu fixieren. Ein Niederhalten oder Einspannen der Werkstücke ist für den hier vorgesehenen Anwendungsbereich nicht immer möglich, da es sich häufig um sehr weiche Materialien handelt. Zusätzlich soll auch bei härteren Materialien das Werkstück bei der Verarbeitung zum Endprodukt nahezu vollständig abgetragen werden, sodass das Werkstück in diesem Fall keine Angriffsfläche mehr zum Einspannen bietet.

Vielmehr hat es sich in diesem Bereich der Verarbeitung von Werkstücken durchgesetzt, die Werkstücke flächig von unten durch einen Unterdruck bzw. ein Vakuum anzuziehen und zu halten. Eine Anziehung von unten hat mehrere Vorteile: unter anderem wird das Werkstück flächig gehalten, was eine gleichmäßige Bearbeitung ermöglicht, weiterhin kann das Werkstück bei einem Schneid- oder Sägevorgang bis auf sehr kleine Dicken heruntergeschnitten werden, ohne dass eine Haltevorrichtung den Prozess behindert.

Um das Werkstück von seiner Unterseite her anzusaugen, weist die Unterlage eine Vielzahl von Durchgangsöffnungen auf, welche strömungstechnisch mit einer Einheit zu Erzeugung eines Unterdrucks in Verbindung stehen.

Um eine möglichst große Brandbreite an Einsatzgebieten und eine Vielzahl von Werkstücken zu verarbeiten, ist es üblich, dass die Unterlage größer ist als das zu verarbeitende Werkstück. Im Bereich der Auflage des Werkstückes sind die Durchgangsöffnungen durch das Werkstück verschlossen, jedoch kann es Durchgangsöffnungen seitlich des Werkstückes geben, welche gegenüber der Umgebung offen sind.

Dies führt gleich zu mehreren Nachteilen: durch die gegenüber der Umgebung offenen Durchgangsöffnungen fördert die Einheit zur Erzeugung eines Unterdrucks einen hohen Volumenstrom. Dies führt dazu, dass der maximale Unterdruck, welcher auf das Werkstück ausgeübt werden könnte, reduziert ist und entsprechend das Werkstück auch nur mit einer geringeren Haltekraft als gewünscht auf der Unterlage gehalten wird. Die Erzeugungseinheit für den Unterdruck muss, bezogen auf die originäre Zielesetzung der Erzeugung eines möglichst großen Unterdrucks, auf einen diesbezüglich deutlich ungünstigen Betriebspunkt mit signifikanten Leckagevolumenstrom ausgelegt werden. Weiterhin entsteht durch die Ansaugung von Umgebungsluft durch die offenen Durchgangsöffnungen eine enorme Geräuschkulisse.

Das zugrundeliegende Ziel der Erfindung ist es, eine Vorrichtung zum Messerschneiden oder Sägen von Werkstücken zur Verfügung zu stellen, mittels welcher möglichst einfach eine besonders hohe Haltekraft auf das zu bearbeitende Werkstück ausgeübt werden kann und gleichzeitig die Geräuschbelastung reduziert wird.

Eine erfindungsgemäße Vorrichtung dient zum Messerschneiden oder Sägen von Werkstücken und weist eine Schneideinheit oder eine Sägeeinheit auf. Bezüglich der Definition von Messerschneiden und Sägen, sowie auf die hier zur Verarbeitung vorgesehenen Werkstücke und Materialien wird auf die vorstehende Beschreibung verwiesen.

Die Vorrichtung ist entsprechend dem Anspruch 1 zusammengesetzt.

Unterhalb der Auflagefläche ist mindestens eine Kammer ausgebildet und die Kammer steht mit einer Einheit zur Erzeugung eines Unterdrucks derart strömungstechnisch in Verbindung, dass in einem Betriebszustand ein Volumenstrom entlang einer Strömungsrichtung durch die Durchgangsöffnungen und die mindestens eine Kammer gefördert wird. Als Einheit zur Erzeugung eines Unterdrucks können dabei jegliche Arten von Vakuumpumpen, Axialventilatoren, Radialventiltoren oder auch passive Elemente, wie eine Venturidüse zum Einsatz kommen. Über die von dem Werkstück verschlossenen Durchgangsöffnungen wirkt dieser Unterdruck auch auf das Werkstück und dieses wird auf der Auflagefläche gehalten.

Erfindungsgemäß ist stromaufwärts der Kammer mindestens ein Abschnitt vorgesehen, in welchem die Durchtrittsquerschnittsfläche für den Volumenstrom in Strömungsrichtung betrachtet abnimmt. Der Abschnitt kann dabei stromaufwärts einer abgeschlossenen Kammer liegen oder der Abschnitt kann auch eine stromaufwärts angeordnete Begrenzung der Kammer umfassen. Wichtig ist, dass in dem Abschnitt die Durchtrittsquerschnittsfläche direkt benachbart zu dem Werkstück größer ist als eine stromabwärts liegende Durchtrittsquerschnittsfläche. Die Durchtrittsquerschnittfläche, die der Volumenstrom auf seinem Weg von der Umgebung in die Kammer passieren muss, kann dabei stetig abnehmen. Beispielsweise können dazu sich in Strömungsrichtung verjüngende Durchgangsöffnungen vorgesehen sein. Es kann auch vorgesehen sein, dass die Durchtrittsquerschnittsfläche in einer oder mehreren Stufen sprunghaft abnimmt. Zum Beispiel können jeweils Blenden in die Durchgangsöffnungen eingesetzt sein oder wie im Folgenden noch beschrieben, Elemente mit unterschiedlichen Durchgangsöffnungen hintereinander angeordnet werden. Es ist auch denkbar, dass die Durchtrittsquerschnittsfläche ausgehend von dem Werkstück zunächst zunimmt und erst dann wieder abnimmt.

Eine Abnahme der Durchtrittsquerschnittsfläche von einer großen Querschnittsfläche hin zu einer kleinen Querschnittsfläche hat gleich zwei Effekte. Zum einen wird durch die offenen, nicht von dem Werkstück verdeckten Durchgangsöffnungen aufgrund der kleinen Querschnittsfläche ein geringerer Volumenstrom aus der Umgebung gefördert. Dies führt dazu, dass in der Kammer ein höherer Unterdruck ausgebildet werden kann. Dieser höhere Unterdruck wirkt sich über die geschlossenen Durchgangsöffnungen auf das Werkstück aus. Aufgrund der werkstückseitigen großen Querschnittsfläche wird aber trotzdem noch eine ausreichend große Haltekraft auf das Werkstück ausgeübt. Aufgrund des reduzierten Volumenstroms kommt es darüber hinaus auch zu einer Reduzierung der strömungsinduzierten Geräusche.

Insbesondere können mittels der erfindungsgemäßen Vorrichtung Druckdifferenzen zwischen der Kammer und der Umgebung im Bereich oder kleiner als 10.000 Pa, vorzugsweise im Bereich oder kleiner als 5.000 Pa und besonders bevorzugt im Bereich oder kleiner als 3.000 Pa erzeugt werden.

Erfindungsgemäß weist der stromaufwärts der Kammer ausgebildete Abschnitt mindestens zwei Bereiche auf. Der erste Bereich weist Durchgangsöffnungen mit einer ersten Querschnittsfläche auf und der zweite Bereich weist Durchgangsöffnungen mit einer zweiten Querschnittsfläche auf. Die erste Querschnittsfläche und die zweite Querschnittsfläche weichen dabei voneinander ab und die Durchgangsöffnungen sind in Strömungsrichtung betrachtet derart angeordnet, dass die Querschnittsflächen abnehmen. Die Anordnung zweier, separater Bereiche mit Durchgangsöffnungen mit unterschiedlichen Querschnittsflächen vereinfacht den Herstellungsprozess und bietet eine höhere Flexibilität, insbesondere können für die beiden Bereiche unterschiedliche Materialien verwendet werden.

So ist der erste Bereich durch die Auflagefläche gebildet und der zweite Bereich durch eine stromabwärts der Auflagefläche angeordnete Schicht aus porösem Material. Die Durchgangsöffnungen oder auch Poren in dem porösen Material weisen eine kleinere Querschnittsfläche auf als die Durchgangsöffnungen in der Auflagefläche. Weiter vorteilhaft ist das Verhältnis der Querschnittsfläche der Poren zur Einlauflänge. Als poröses Material kommt insbesondere Kork, Vlies, ein Gummiverbund oder ein Gummikorkverbund in Betracht. Mit einer Schicht aus porösem Material können auf einfache Weise viele Durchgangsöffnungen mit einer kleinen Querschnittsfläche realisiert werden. Insbesondere kann die Schicht aus dem porösen Material kostengünstig als Matte bezogen werden. Eine Schicht aus porösem Material hat den zusätzlichen Effekt, selbst als Schalldämpfer zu wirken, was die Lautstärke im Betrieb der Vorrichtung weiter reduziert.

Die Schicht aus dem porösem Material ist insbesondere direkt an der Auflagefläche anliegend angeordnet. So ergibt sich ein besonders hoher Unterdruck, der sich direkt auf das Werkstück auswirkt. Wie im Folgenden noch beschrieben wird, ist dies insbesondere bei Vorrichtungen mit reversierendem Tisch realisiert.

Besonders gute Ergebnisse im Hinblick auf die Erzeugung des Unterdrucks und der Haltekraft auf das Werkstück wurden erzielt, wenn die Schicht aus porösem Material eine Dicke von 0,5 mm bis 10 mm aufweist und bevorzugt von 1 mm bis 5 mm.

Um die Schicht aus porösem Material möglichst dicht und gleichmäßig an die Auflagefläche heranzuführen und dort zu halten, ist die Schicht aus dem porösen Material durch eine flächige, luftdurchlässige Stützkonstruktion gestützt, insbesondere durch ein Stützblech bzw. ein Lochblech. Dies ist insbesondere dann von Vorteil, wenn es sich bei der Schicht aus dem porösen Material um eine flexible Matte handelt, welche aufgrund ihrer geringen Steifigkeit sonst durchhängen würde. Der Durchhang führt zu einem unerwünschten Zwischenraum, der den positiven Effekt der Schicht aus dem porösen Material abschwächt, da potenziell Luftaustausch zwischen durch das Werkstück verschlossenen und nicht-verschlossenen Durchgangsöffnungen stattfinden kann. Die Stützkonstruktion verengt den Durchtrittsquerschnitt für den Volumenstrom nicht weiter, sondern weist Durchgangsöffnungen auf, welche einen größeren Öffnungsquerschnitt aufweisen als die Durchgangsöffnungen des porösen Materials. So werden durch die Stützkonstruktion kein weiterer Widerstand für den Volumenstrom verursacht.

Zusätzlich kann stromaufwärts der Auflagefläche eine Schicht aus luftundurchlässigem Material mit Durchgangsöffnungen angeordnet sein, wobei die Durchgangsöffnungen in der Schicht aus luftundurchlässigem Material eine identische oder kleinere Querschnittsfläche aufweisen als die Querschnittsfläche der Durchgangsöffnungen der Auflagefläche. Die Querschnittsflächen der Durchgangsöffnungen der Auflagefläche können dann weitestgehend frei gestaltet sein. Wichtig bei der Auslegung der Durchgangsöffnung in der Schicht aus luftundurchlässigem Material ist das Verhältnis zwischen notwendiger Stützfläche (um eine starke Deformation des Werkstückes zu verhindern) zu Druckübertragungsfläche (um eine maximale Haltekraft auf das Werkstück auszuüben).

Alternativ könnte der zweite Bereich durch die Auflagefläche gebildet sein und der erste Bereich durch eine stromaufwärts der Auflagefläche angeordnete Schicht aus luftundurchlässigen Material. Diese Schicht aus luftundurchlässigem Material weist Durchgangsöffnungen mit Querschnittsflächen auf, die größer sind als die Querschnittsflächen der Durchgangsöffnungen der Auflagefläche. Die Durchgangsöffnungen in der Schicht aus luftundurchlässigem Material stellen große Halteflächen für die Anziehung des Werkstückes bereit.

Insbesondere kann auch eine Kombination von Auflagefläche, darüber angeordneter Schicht aus luftundurchlässigem Material und darunter angeordneter Schicht aus einem porösen Material eingesetzt werden, um einen möglichst hohen Unterdruck bzw. eine möglichst große Haltekraft zu erzeugen. Dazu umfasst der Abschnitt stromaufwärts der Kammer insbesondere drei Bereiche, wobei in Strömungsrichtung betrachtet ein erster Bereich durch eine Schicht aus luftundurchlässigen Material mit Durchgangsöffnungen gebildet ist, der zweite Bereich durch die Auflagefläche mit Durchgangsöffnungen und der dritte Bereich durch eine Schicht aus porösem Material mit Durchgangsöffnungen bzw. Poren. Die Querschnittsflächen der Durchgangsöffnungen nehmen in Strömungsrichtung betrachtet über die drei Bereiche hinweg ab. In dieser Ausführungsform werden neben der für den Unterdruck vorteilhaften Querschnittsverkleinerung auch die weiteren vorteilhaften Eigenschaften der einzelnen Bereiche ausgenutzt, nämlich die kostengünstige und schallabsorbierende Schicht aus porösem Material und die Elastizität der Schicht aus luftundurchlässigem Material. Es sei noch darauf hingewiesen, dass die Schicht aus porösem Material zudem mit einer wie oben beschriebenen Stützkonstruktion gestützt sein kann.

Insgesamt ist es vorteilhaft, wenn die Durchgangsöffnungen der Schicht, welche direkt am Werkstück anliegt eine größere Querschnittsfläche aufweist als die Durchgangsöffnungen einer oder beider der darunterliegenden Bereiche oder Schichten.

Insbesondere ist die Schicht aus luftundurchlässigem Material durch eine elastische Matte gebildet. Die Schicht ist derart elastisch, dass das Werkstück durch seine Gewichtskraft und die durch den Unterdruck auf das Werkstück wirkende Kraft leicht in die Matte einsinken kann und so möglichst die gesamte Unterseite des Werkstückes aufliegt und die direkt unterhalb des Werkstückes liegenden Durchgangsöffnungen wirksam verschlossen sind. Insgesamt wird das Werkstücke damit kraftschlüssig und formschlüssig gehalten und es wird verhindert, dass das Werkstück bei der Bearbeitung verrutscht. Die auf der Auflagefläche angeordnete Matte kann zusätzlich einen größeren Reibwert aufweisen als die Auflagefläche.

Es gibt je nach Anwendungsfall verschiedene Möglichkeiten die Auflagefläche der Vorrichtung zu bewegen, um das Werkstück zu schneiden oder zu sägen. Insbesondere kann die Vorrichtung als reversierender Tisch oder als rotierender Tisch oder als Tisch mit einem endlos umlaufenden Band ausgelegt sein. Im Folgenden wird auf für die Erfindung relevante Einzelheiten zu den verschiedenen Varianten eingegangen.

Insbesondere ist die Auflagefläche Teil eines reversierenden Tisches. Der Tisch ist dazu ausgebildet, das Werkstück wiederkehrend vor und zurück zu verfahren. Bei der Auflagefläche handelt es sich insbesondere um eine Tischplatte. Gerade bei reversierenden Tischen kommt der durch die Querschnittsverkleinerung verringerten Förderung von Volumenstrom besondere Bedeutung zu. Im Stand der Technik weisen solche reversierenden Tische nämlich aufgrund des großen Volumenstroms, der durch die offenen Durchgangsöffnungen gefördert wird, mehrere Kammern auf, welche jeweils mit einer eigenen Einheit zur Erzeugung eines Unterdrucks in Verbindung stehen. Üblicherweise weisen solche reversierenden Tische vier oder mehr Einheiten zur Erzeugung von Unterdruck auf, die direkt an dem Tisch selbst, unterhalb der Auflagefläche angeordnet sind.

Bei einer erfindungsgemäßen Vorrichtung ist die Einheit zur Erzeugung eines Unterdrucks insbesondere beabstandet zum reversierenden Tisch angeordnet. Insbesondere ist nur eine einzige Einheit zur Erzeugung eines Unterdrucks mit dem Tisch verbunden. Insbesondere ist die Einheit zur Erzeugung eines Unterdrucks ortsfest und der Tisch verfährt relativ dazu.

Diese möglichen Umkonstruktionen eines reversierenden Tisches sind eine direkte Folge des durch die Querschnittsverringerung reduzierten Volumenstroms. Die Reduktion der Anzahl an Einheiten zur Erzeugung des Unterdrucks führt zum einen zu einer Kostenersparnis und weniger Lautstärke. Ferner kann die Einheit zur Erzeugung des Unterdrucks als ein Verursacher von Lärm auch entfernt von dem Tisch aufgestellt werden.

Der Tisch kann dabei weiterhin mehrere Kammern aufweisen, welche jeweils über eine Leitung mit der Einheit zur Erzeugung eines Unterdrucks verbunden sind. Die Leitungen können einen vergleichsweise kleinen Querschnitt aufweisen und als Folge davon auch nur ein geringes Gewicht, sodass es möglich ist, diese Leitungen mit dem Tisch mitzubewegen.

Alternativ kann die Auflagefläche Teil eines drehenden Tisches sein, wobei die Auflagefläche über mindestens eine stationäre Kammer hinweg rotierend ausgebildet ist. Auch hier kann es sich bei der Auflagefläche um eine rotierende Tischplatte handeln. Die mindestens eine Kammer ist bevorzugt nur in einem Bereich direkt unterhalb einer Messerschneideinheit oder einer Sägeeinheit angeordnet. In diesem Bearbeitungsbereich ist das Werkstück an der Auflagefläche fixiert. Bei einem drehenden Tisch rotiert die Auflagefläche und das Werkstück wird wiederkehrend an der Messerschneideinheit oder Sägeeinheit vorbeigeführt.

Für einen drehenden Tisch sind zwei Möglichkeiten für die Anordnung der Schicht aus dem porösen Material denkbar:
a) die Schicht aus dem porösen Material ist mit der Auflagefläche verbunden und mit dieser rotierend ausgebildet
   oder
b) die Schicht aus dem porösen Material ist stationär im Bereich der Kammer angeordnet. Insbesondere erstreckt sich die Schicht aus dem porösen Material dann nur über einen Teilbereich des Tisches, in welchem die Kammer angeordnet ist.

Es kann auch vorgesehen sein, dass stromaufwärts der Auflagefläche ein endloses Transportband angeordnet ist, welches um einen Tisch mit einer integrierter Kammer umlaufend ausgebildet ist. Bei dem Transportband kann es sich um eine wie vorstehend beschriebene Schicht aus einem luftundurchlässigen Material handeln, welche zusätzlich um den Tisch umlaufend ausgebildet ist. Das Transportband kann Durchgangsöffnungen aufweisen, insbesondere mit gleichen oder kleineren Querschnittsflächen als die Auflagefläche. Insbesondere weist die Auflagefläche mehrere sich in Bewegungsrichtung erstreckende Langlöcher auf, um eine möglichst gleichmäßige Übertragung des Unterdrucks über die Durchgangsöffnungen in dem Transportband auf das Werkstück zu bewirken. Dann ist insbesondere stromabwärts der stationären Auflagefläche die Schicht aus porösem Material angeordnet.

Weitere Ausführungsformen und Details sind in Zusammenhang mit den Figuren beschrieben. Es zeigen:
- Fig. 1: eine erfindungsgemäße Vorrichtung in einer ersten Ausführungsform in einem schematischen Querschnitt,
- Fig. 2: die Vorrichtung aus Fig. 1 mit einer daran angeschlossenen Einheit zur Erzeugung eines Unterdruckes,
- Fig. 3: eine erfindungsgemäße Vorrichtung in einer zweiten Ausführungsform in einem schematischen Querschnitt,
- Fig. 4: eine erfindungsgemäße Vorrichtung in einer dritten Ausführungsform in einem schematischen Querschnitt, und
- Fig. 5: eine erfindungsgemäße Vorrichtung in einer vierten Ausführungsform in einem schematischen Querschnitt.

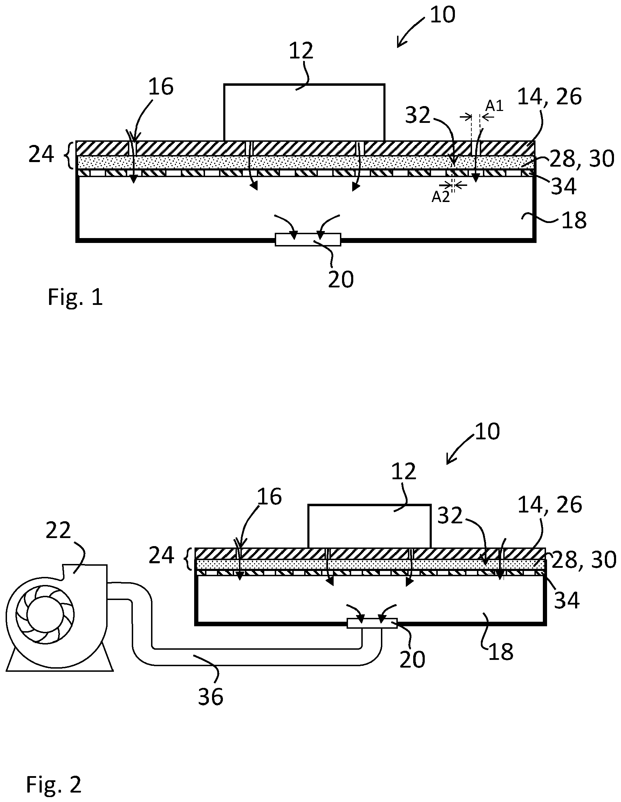

In den Fig. 1 und 2 ist eine erste Ausführungsform einer Vorrichtung 10 zum Messerschneiden oder Sägen von Werkstücken 12 dargestellt. Eine Schneideinheit oder Sägeeinheit sind hier der Übersichtlichkeit halber nicht dargestellt.

Die Vorrichtung 10 weist eine Auflagefläche 14 mit Durchgangsöffnungen 16 auf. Die Durchgangsöffnungen 16 weisen hier eine Querschnittsfläche A1 auf. Auf der Auflagefläche 14 ist in den Fig. 1 und 2 ein Werkstück 12 angeordnet.

Unterhalb der Auflagefläche 14 ist eine Kammer 18 angeordnet. Die Kammer 18 steht hier über einen Anschluss 20 mit einer Einheit zur Erzeugung eines Unterdruckes 22 (vgl. Fig. 2) in Verbindung. Die Einheit zur Erzeugung eines Unterdrucks 22 fördert einen Volumenstrom gemäß der Pfeile in einer Strömungsrichtung. Es kann statt des Anschlusses 20 auch direkt eine Einheit zur Erzeugung eines Unterdrucks 22 in die Kammer 18 integriert sein.

Stromaufwärts der Kammer 18 ist ein Abschnitt 24 angeordnet, der zwei Bereiche 26, 28 umfasst. Ein erster Bereich 26 ist durch die Auflagefläche 14 gebildet und ein zweiter Bereich 28 durch eine Schicht 30 aus einem porösen Material. Die Schicht 30 aus dem porösen Material weist Durchgangsöffnungen 32 bzw. Poren auf, welche eine Querschnittsfläche A2 aufweisen, die kleiner ist als die Querschnittsfläche A1 der Durchgangsöffnungen 16. Die Querschnittsfläche A2 für eine Pore bzw. Durchgangsöffnung 32 in der Schicht 30 aus porösem Material ist in Fig. 1 exemplarisch dargestellt.

Stromabwärts, d.h. unterhalb der Schicht 30 aus dem porösen Material ist eine luftdurchlässige Stützkonstruktion 34 angeordnet, um die Schicht 30 aus dem porösen Material zu stützen. Die Schicht 30 aus dem porösen Material liegt hier unmittelbar an der Auflagefläche 14 an.

Die Auflagefläche 14, die Schicht 30 aus dem porösem Material, die Stützkonstruktion 34 und die Kammer 18 gehören in dieser ersten Ausführungsform sämtlich zu einem reversierenden Tisch. Die vorstehend genannten Elemente fahren wiederkehrend hin- und her (in die Blattebene hinein und heraus).

Um das Werkstück 12 auf der Auflagefläche 14 zu halten, dient die Einheit zur Erzeugung eines Unterdruckes 22. Die Einheit zur Erzeugung eines Unterdrucks 22 fördert einen Volumenstrom gemäß der Pfeile in Strömungsrichtung durch die Durchgangsöffnungen 16 in der Auflagefläche 14, durch die Durchgangsöffnungen bzw. Poren 32 der Schicht 30 aus dem porösen Material bis in die Kammer 18 hinein. Von dort wird der Volumenstrom durch den Anschluss 20 und eine Leitung 36 zu der Einheit zur Erzeugung eines Unterdrucks 22 gefördert.

Wie oben bereits erläutert, wird durch die Schicht 30 aus dem porösen Material eine Querschnittsverengung realisiert, so dass über die offenen Durchgangsöffnungen 16 seitlich des Werkstückes 12 ein geringer Volumenstrom gefördert wird und daher in der Kammer 18 ein wesentlich höherer Unterdruck von der Einheit zur Erzeugung des Unterdrucks 22 erzeugt werden kann. Dieser erhöhte Unterdruck liegt über die von dem Werkstück 12 verschlossenen Durchgangsöffnungen 16 an dem Werkstück 12 an, welches damit besonders gut auf der Auflagefläche 14 gehalten wird.

Die Vorrichtung 10 gemäß dieser ersten Ausführungsform mit dem reversierenden Tisch weist nur eine einzige Einheit zur Erzeugung eines Unterdruck 22 auf. Wie in Fig. 2 gut zu erkennen ist, ist die Einheit zur Erzeugung eines Unterdruck 22 beabstandet von dem reversierenden Tisch mit der Auflagefläche 14 und der Kammer 18 angeordnet und ortsfest.

Die Kammer 18 ist über die Leitung 36 mit der Einheit zur Erzeugung eines Unterdrucks 22 verbunden. In die Blattebene hinein sind mehrere Kammern hintereinander angeordnet (nicht erkennbar), welche jeweils über eine separate Leitung ebenfalls mit der Einheit zur Erzeugung eines Unterdrucks 22 verbunden sind.

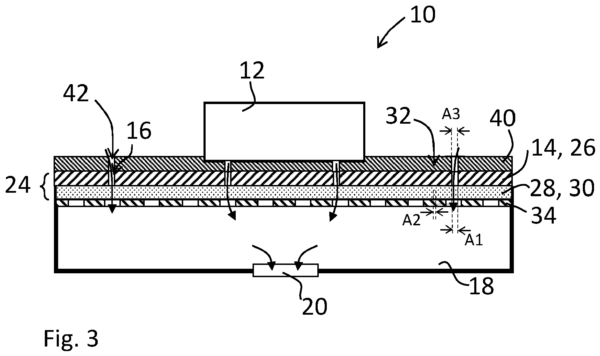

In den Fig. 3 bis 5 sind im Folgenden weitere Ausführungsformen der Vorrichtung 10 gezeigt, wobei zur Beschreibung der weiteren Ausführungsformen für identische oder zumindest funktionsgleiche Elemente dieselben Bezugszeichen verwendet werden wie zur Beschreibung der ersten Ausführungsform.

In Fig. 3 ist eine zweite Ausführungsform einer Vorrichtung 10 dargestellt. Auch hierbei handelt es sich um einen reversierenden Tisch. Diese zweite Ausführungsform unterscheidet sich von der ersten Ausführungsform dadurch, dass stromaufwärts der Auflagefläche 14 eine Schicht 40 aus luftundurchlässigem Material angeordnet ist. Diese Schicht 40 aus luftundurchlässigem Material weist Durchgangsöffnungen 42 mit einem Öffnungsquerschnitt A3 auf. Der Öffnungsquerschnitt A3 der Durchgangsöffnungen 42 entspricht dabei dem Öffnungsquerschnitt A1 der Durchgangsöffnungen 16 in der Auflagefläche.

Durch die Schicht 40 aus dem luftundurchlässigen Material mit den Durchgangsöffnungen 42 wird eine ausreichende Haltefläche realisiert. An dem Volumenstrom durch die unverschlossenen Durchgangsöffnungen 16, 42 ändert sich im Wesentlichen nichts, da hier vor allem die Querschnittsflächen der Durchgangsöffnungen 32 der Schicht 30 aus dem porösen Material wirken.

Es sei darauf hingewiesen, dass auch Ausführungsformen denkbar sind, in welcher die Querschnittsfläche A3 der Durchgangsöffnungen 42 der Schicht 40 kleiner ist als die Querschnittsfläche A1 der Durchgangsöffnungen 16 der Auflagefläche 14.

Wie in Fig. 3 ferner gut zu erkennen, ist die Schicht 40 aus dem undurchlässigen Material ist elastisch. Das Werkstück 12 kann in die Schicht 40 einsinken.

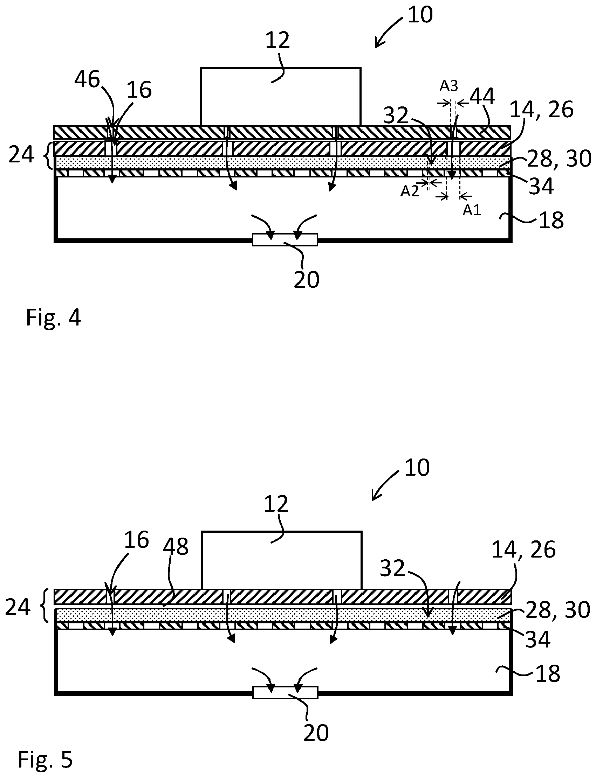

In Fig. 4 ist eine dritte Ausführungsform der Vorrichtung 10 gezeigt, wobei sich diese Ausführungsform von ersten Ausführungsform in den Fig. 1 und 2 dadurch unterscheidet, dass stromaufwärts der Auflagefläche 14 noch ein Transportband 44 angeordnet ist. Das Transportband 44 umläuft den gesamten Tisch mitsamt Auflagefläche 14 und Kammer 18. Das Transportband weist Durchgangsöffnungen 46 auf, welche hier kleinere Querschnittsflächen aufweisen als die Durchgangsöffnungen 16 in der Auflagefläche 14. Die Durchgangsöffnungen 16 in der Auflagefläche können als sich in Bewegungsrichtung erstreckende Langlöcher ausgebildet sein. Beim Überfahren der Durchgangsöffnungen 16 weisen damit die Durchgangsöffnungen 46 über einen großen Zeitraum Überschneidungen auf. Das Transportband 44 erfüllt eine ähnliche Funktion wie die Schicht 40 aus luftundurchlässigem Material in Fig. 3, jedoch ist das Transportband 44 nicht mit der Auflagefläche 14 verbunden.

In Fig. 5 ist eine vierte Ausführungsform dargestellt, wobei diese Vorrichtung 10 einen rotierenden Tisch betrifft. Die Auflagefläche 14 ist hier als rotierende Tischplatte ausgelegt, welche über eine stationäre Kammer 18 hinweg rotiert. Die Schicht 30 aus dem porösen Material ist stationär im Bereich der Kammer 18 angeordnet und die Auflagefläche 14 rotiert darüber hinweg. Daher sind die Auflagefläche 14 und die Schicht 30 aus dem porösen Material hier beabstandet voneinander angeordnet. Der Zwischenraum 48 ist gegenüber der Umgebung abgedichtet (nicht dargestellt).

### Bezugszeichenliste

- 10: Vorrichtung
- 12: Werkstück
- 14: Auflagefläche
- 16: Durchgangsöffnung (in der Auflagefläche)
- 18: Kammer
- 20: Einheit zur Erzeugung eines Unterdrucks
- 22: Anschluss
- 24: Abschnitt
- 26: erster Bereich
- 28: zweiter Bereich
- 30: Schicht aus porösem Material
- 32: Durchgangsöffnung (Pore, in der Schicht aus porösem Material)
- 34: Stützkonstruktion
- 36: Leitung
- 40: Schicht aus luftundurchlässigem Material
- 42: Durchgangsöffnungen (in der Schicht aus luftundurchlässigem Material)
- 44: Transportband
- 46: Durchgangsöffnungen (in dem Transportband)
- 48: Zwischenraum

## Patentansprüche

1. Vorrichtung zum Messerschneiden oder Sägen von Werkstücken (12), umfassend eine Schneideinheit oder eine Sägeeinheit und eine Auflagefläche (14) zur Auflage des Werkstückes (12), wobei die Auflagefläche (14) zum unmittelbaren Aufliegen des Werkstückes (12) dient und/oder wobei die Auflagefläche (14) eine stabile, biegesteife Fläche ist, welche zum Tragen der Gewichtskraft des Werkstückes dient, wobei die Auflagefläche (14) eine Vielzahl von Durchgangsöffnungen (16) aufweist, wobei unterhalb der Auflagefläche (14) mindestens eine Kammer (18) ausgebildet ist und die Kammer (18) mit einer Einheit zur Erzeugung eines Unterdrucks (22) derart strömungstechnisch in Verbindung steht, dass in einem Betriebszustand ein Volumenstrom entlang einer Strömungsrichtung durch die Durchgangsöffnungen (16) und die mindestens eine Kammer (18) gefördert wird,
wobei
stromaufwärts der Kammer (18) mindestens ein Abschnitt (24) vorgesehen ist, in welchem die Durchtrittsquerschnittsfläche für den Volumenstrom in Strömungsrichtung betrachtet abnimmt, **dadurch gekennzeichnet, dass** der stromaufwärts der Kammer (18) ausgebildete Abschnitt (24) mindestens zwei Bereiche (26, 28) aufweist, wobei der erste Bereich (26) durch die Auflagefläche (14) gebildet ist und der zweite Bereich (28) durch eine stromabwärts der Auflagefläche (14) angeordnete Schicht (30) aus porösem Material gebildet ist, wobei diese Schicht (30) Durchgangsöffnungen (32) mit Querschnittsflächen (A2) aufweist, die kleiner sind als die Querschnittsflächen (A1) der Durchgangsöffnungen (16) der Auflagefläche (14).

2. Vorrichtung nach dem vorstehenden Anspruch, **dadurch gekennzeichnet, dass** die Schicht (30) aus porösem Material eine Dicke von 0,5 mm bis 10 mm aufweist.

3. Vorrichtung nach einem der beiden vorstehenden Ansprüche, **dadurch gekennzeichnet, dass** die Schicht (30) aus porösem Material durch eine flächige, luftdurchlässige Stützkonstruktion (34) gestützt ist, wobei die Stützkonstruktion (34) Durchgangsöffnungen aufweist und wobei die Durchgangsöffnungen der Stützkonstruktion (34) eine größere Querschnittsfläche aufweisen als die Durchgangsöffnungen (32) der Schicht (30) aus porösem Material.

4. Vorrichtung nach einem der drei vorstehenden Ansprüche, **dadurch gekennzeichnet, dass** stromaufwärts der Auflagefläche (14) eine Schicht (40) aus luftundurchlässigem Material mit Durchgangsöffnungen (42) angeordnet ist, wobei die Durchgangsöffnungen (42) eine identische oder kleinere Querschnittsfläche (A3) aufweisen als die Querschnittsfläche (A1) der Durchgangsöffnungen (16) der Auflagefläche (14).

5. Vorrichtung nach einem der vorstehenden Ansprüche, **dadurch gekennzeichnet, dass** der Abschnitt (24) stromaufwärts der Kammer (18) drei Bereiche umfasst, wobei in Strömungsrichtung betrachtet der erste Bereich durch eine Schicht (40) aus luftundurchlässigen Material mit Durchgangsöffnungen (42) gebildet ist, der zweite Bereich durch die Auflagefläche (14) mit Durchgangsöffnungen (16) und der dritte Bereich durch eine Schicht (30) aus porösem Material mit Durchgangsöffnungen (32) gebildet ist, wobei die Querschnittsflächen der Durchgangsöffnungen (42, 16, 32) in Strömungsrichtung betrachtet über die drei Bereiche hinweg abnehmen.

6. Vorrichtung nach dem vorstehenden Anspruch, **dadurch gekennzeichnet, dass** die Schicht (40) aus luftundurchlässigem Material durch eine elastische Matte gebildet ist.

7. Vorrichtung nach einem der vorstehenden Ansprüche **dadurch gekennzeichnet, dass** die Auflagefläche (14) Teil eines reversierenden Tisches ist, wobei der Tisch dazu ausgebildet ist, das Werkstück (12) wiederkehrend vor und zurück zu verfahren.

8. Vorrichtung nach einem der vorstehenden Ansprüche, **dadurch gekennzeichnet, dass** die Einheit zur Erzeugung eines Unterdrucks (22) beabstandet zum Tisch angeordnet ist.

9. Vorrichtung nach einem der beiden vorstehenden Ansprüche, **dadurch gekennzeichnet, dass** nur eine einzige Einheit zur Erzeugung eines Unterdrucks (22) mit dem Tisch verbunden ist und wobei die Einheit zur Erzeugung eines Unterdrucks (22) ortsfest ist und der Tisch relativ dazu verfährt.

10. Vorrichtung nach dem vorstehenden Anspruch, **dadurch gekennzeichnet, dass** der Tisch mehrere Kammern (18) aufweist, welche jeweils über eine Leitung (34) mit der Einheit zur Erzeugung eines Unterdrucks (22) verbunden sind.

11. Vorrichtung nach einem der vorstehenden Ansprüche 3 bis 6, **dadurch gekennzeichnet, dass** die Auflagefläche (14) Teil eines rotierenden Tisches ist, wobei die Auflagefläche (14) über eine stationäre Kammer (18) hinweg rotierend ausgebildet ist und wobei
a) die Schicht (30) aus dem porösen Material mit der Auflagefläche (14) verbunden ist und mit dieser rotierend ausgebildet ist
oder
b) die Schicht (30) aus dem porösen Material stationär im Bereich der Kammer (18) angeordnet ist.

12. Vorrichtung nach einem der vorstehenden Ansprüche, **dadurch gekennzeichnet, dass** stromaufwärts der Auflagefläche (16) ein endloses Transportband (42) angeordnet ist, welches um einen Tisch mit einer integrierten Kammer (18) umlaufend ausgebildet ist.

## Claims

1. A device for knife cutting or sawing workpieces (12), comprising a cutting unit or a sawing unit and a support surface (14) for supporting the workpiece (12), wherein the support surface (14) serves to directly support the workpiece (12) and/or wherein the support surface (14) is a stable, flexurally rigid surface which serves to bear the weight of the workpiece, wherein the support surface (14) has a plurality of passage openings (16), wherein at least one chamber (18) is formed below the support surface (14) and the chamber (18) is fluidically connected to a unit for generating an underpressure (22) in such a way that in an operating state a volume flow is conveyed along a direction of flow through the passage openings (16) and the at least one chamber (18), wherein at least one section (24) is provided upstream from the chamber (18), in which the cross-sectional area for the volume flow decreases as viewed in the direction of flow, **characterized in that** the section (24) formed upstream from the chamber (18) has at least two areas (26, 28), wherein the first area (26) is formed by the support surface (14) and the second area (28) is formed by a layer (30) comprised of porous material arranged downstream from the support surface (14), wherein the layer (30) has passage openings (32) with cross-sectional areas (A2) that are smaller than the cross-sectional surfaces (A1) of the passage openings (16) of the support surface (14).

2. Device according to the preceding claim, **characterized in that** the layer (30) comprised of porous material has a thickness of 0.5 mm to 10 mm.

3. Device according to one of the two preceding claims, **characterized in that** the layer (30) comprised of porous material is supported by a flat, air-permeable support structure (34), wherein the support structure (34) has passage openings and wherein the passage openings of the support structure (34) have a larger cross-sectional area than the passage openings of the support structure (34) than the passage openings (32) of the layer (30) comprised of porous material.

4. Device according to one of the three preceding claims, **characterized in that** a layer (40) of air-impermeable material with through-openings (42) is arranged upstream of the support surface (14), the through-openings (42) having an identical or smaller cross-sectional area (A3) than the cross-sectional area (A1) of the through-openings (16) of the support surface (14).

5. Device according to one of the preceding claims, **characterized in that** the section (24) upstream of the chamber (18) comprises three regions, the first region, viewed in the direction of flow, being formed by a layer (40) of air-impermeable material with through-openings (42), the second region being formed by the support surface (14) with through-openings (16) and the third region is formed by a layer (30) of porous material with through-openings (32), the cross-sectional areas of the passage openings (42, 16, 32) decrease over the three areas as viewed in the direction of flow.

6. Device according to the preceding claim, **characterized in that** the layer (40) comprised of air-impermeable material is formed by an elastic mat.

7. Device according to one of the preceding claims, **characterized in that** the support surface (14) is part of a reversing table, wherein the table is designed to move the workpiece (12) back and forth repeatedly.

8. Device according to one of the preceding claims, **characterized in that** the unit for generating an underpressure (22) is arranged spaced apart from the table.

9. Device according to one of the two preceding claims, **characterized in that** only a single unit for generating underpressure (22) is connected with the table and wherein the unit for generating underpressure (22) immovably fixed and the table moves relative thereto.

10. Device according to the preceding claim, **characterized in that** the table has several chambers (18) which each are connected by a pipe (34) with the unit for generating underpressure (22).

11. Device according to one of the preceding claims 3 to 6, **characterized in that** the support surface (14) is part of a rotating table, wherein the support surface (14) is designed to rotate over a stationary chamber (18) and wherein
a) the layer (30) comprised of the porous material is connected with the support surface (14) and is designed to rotate with the latter, or
b) the layer (30) comprised of the porous material is stationarily arranged in the area of the chamber (18).

12. Device according to one of the preceding claims, **characterized in that** an endless transport belt (42) is arranged upstream from the support surface (16), which transport belt is designed to run around a table with an integrated chamber (18).

## Revendications

1. Dispositif pour couper au couteau ou scier des pièces (12), comprenant une unité de coupe ou une unité de sciage et une surface d'appui (14) pour appuyer la pièce (12), dans lequel la surface d'appui (14) sert à appuyer directement la pièce (12) et/ou dans lequel la surface d'appui (14) est une surface stable et rigide en flexion qui sert à supporter le poids de la pièce, dans lequel la surface d'appui (14) comprend une pluralité d'ouvertures traversantes (16), dans lequel au moins une chambre (18) est formée au-dessous de la surface d'appui (14), et la chambre (18) est reliée fluidiquement à une unité de génération d'une pression négative (22) de telle sorte que, dans un état de fonctionnement, un flux volumique est acheminé suivant une direction d'écoulement à travers les ouvertures traversantes (16) et ladite au moins une chambre (18),
dans lequel
en amont de la chambre (18) est prévue au moins une section (24) dans laquelle, vue dans la direction d'écoulement, la surface de section de passage pour le flux volumique diminue, **caractérisé par le fait que** la section (24) formée en amont de la chambre (18) comprend au moins deux zones (26, 28), dans lequel la première zone (26) est formée par la surface d'appui (14) et la deuxième zone (28) est formée par une couche (30) en matériau poreux qui est disposée en aval de la surface d'appui (14), dans lequel cette couche (30) présente des ouvertures traversantes (32) dont les surfaces de section (A2) sont plus petites que les surfaces de section (A1) des ouvertures traversantes (16) de la surface d'appui (14).

2. Dispositif selon la revendication précédente, **caractérisé par le fait que** la couche (30) en matériau poreux présente une épaisseur comprise entre 0,5 mm et 10 mm.

3. Dispositif selon l'une quelconque des deux revendications précédentes, **caractérisé par le fait que** la couche (30) en matériau poreux est supportée par une structure de support (34) plane et perméable à l'air, dans lequel la structure de support (34) présente des ouvertures traversantes et dans lequel les ouvertures traversantes de la structure de support (34) présentent une surface de section qui est plus grande que celle des ouvertures traversantes (32) de la couche (30) en matériau poreux.

4. Dispositif selon l'une quelconque des trois revendications précédentes, **caractérisé par le fait qu'**une couche (40) en matériau imperméable à l'air comprenant des ouvertures traversantes (42) est disposée en amont de la surface d'appui (14), dans lequel les ouvertures traversantes (42) présentent une surface de section (A3) qui est identique à ou plus petite que la surface de section (A1) des ouvertures traversantes (16) de la surface d'appui (14).

5. Dispositif selon l'une quelconque des revendications précédentes, **caractérisé par le fait que** la section (24) en amont de la chambre (18) comprend trois zones, dans lequel la première zone, vue dans la direction d'écoulement, est formée par une couche (40) en matériau imperméable à l'air comprenant des ouvertures traversantes (42), la deuxième zone est formée par la surface d'appui (14) avec des ouvertures traversantes (16) et la troisième zone est formée par une couche (30) en matériau poreux comprenant des ouvertures traversantes (32), dans lequel, vues dans la direction d'écoulement, les surfaces de section des ouvertures traversantes (42, 16, 32) diminuent sur les trois zones.

6. Dispositif selon la revendication précédente, **caractérisé par le fait que** la couche (40) en matériau imperméable à l'air est formée par un tapis élastique.

7. Dispositif selon l'une quelconque des revendications précédentes, **caractérisé par le fait que** la surface d'appui (14) fait partie d'une table inverseuse, dans lequel la table est conçue pour déplacer la pièce (12) en avant et en arrière de manière répétée.

8. Dispositif selon l'une quelconque des revendications précédentes, **caractérisé par le fait que** l'unité de génération d'une pression négative (22) est disposée à distance de la table.

9. Dispositif selon l'une quelconque des deux revendications précédentes, **caractérisé par le fait qu'**une seule unité de génération d'une pression négative (22) est reliée à la table et dans lequel l'unité de génération d'une pression négative (22) est fixe et la table se déplace par rapport à celle-ci.

10. Dispositif selon la revendication précédente, **caractérisé par le fait que** la table comprend une pluralité de chambres (18) dont chacune est reliée par une conduite (34) à l'unité de génération d'une pression négative (22).

11. Dispositif selon l'une quelconque des revendications précédentes 3 à 6, **caractérisé par le fait que** la surface d'appui (14) fait partie d'une table tournante, dans lequel la surface d'appui (14) est conçue de manière à tourner sur une chambre fixe (18) et dans lequel
a) la couche (30) en matériau poreux est reliée à la surface d'appui (14) et est conçue de manière à tourner avec elle
ou
b) la couche (30) en matériau poreux est disposée de manière fixe au niveau de la chambre (18).

12. Dispositif selon l'une quelconque des revendications précédentes, **caractérisé par le fait qu'**une bande transporteuse sans fin (42) est disposée en amont de la surface d'appui (16), qui est destinée à circuler autour d'une table à chambre intégrée (18).
